(19) Europäisches Patentamt
European Patent Office
Office européen des brevets

(11) Publication number: **0 040 050**
**A2**

(12) # EUROPEAN PATENT APPLICATION

(21) Application number: **81302018.7**

(22) Date of filing: **07.05.81**

(51) Int. Cl.$^{3}$: **A 01 N 43/54**
//(A01N43/54, 41/06)

(30) Priority: **09.05.80 US 148115**

(43) Date of publication of application:
**18.11.81 Bulletin 81/46**

(84) Designated Contracting States:
**AT BE CH DE FR GB IT LI LU NL SE**

(71) Applicant: **ELI LILLY AND COMPANY**
**307, East McCarty Street**
**Indianapolis Indiana 46206(US)**

(72) Inventor: **Miller, Jack Ray**
**1327 Bluebird Drive**
**Greenfield Indiana(US)**

(74) Representative: **Hudson, Christopher Mark et al,**
**Erl Wood Manor**
**Windlesham Surrey GU20, 6PH(GB)**

(54) **Plant growth regulator compositions and method.**

(57) A turfgrass growth regulator composition is described, which comprises about 0.05 to about 1.0 part by weight of mefluidide and about 0.05 to about 5.0 parts by weight of α-(1-methylethyl)-α-[4-trifluoromethoxy)- phenyl]-5-pyrimidinemethanol, or suitable salts thereof. A method for regulating the growth of such vegetation is also described.

EP 0 040 050 A2

Croydon Printing Company Ltd.

# PLANT GROWTH REGULATOR COMPOSITIONS AND METHOD

This invention relates to compositions employing known growth regulating agents. The compositions have improved properties over the respective ingredients.

The plant growth regulation art has now advanced to a stage in which compounds are available which can cause very specific and selective affects upon the growth and development of certain plants. For example, several agents are now in commercial use which either kill or greatly retard the growth of one or several grassy or broadleaf weeds, yet exhibit little or no adverse affect upon the growth and development of desired crop plants such as soybeans, cotton, corn and other crops. The discovery and development of compounds which exhibit such selective herbicidal activity has virtually revolutionized the agriculture industry.

Since a great deal of efficacious selectivity often is associated with compounds which are useful due to their plant growth regulant activity, it is difficult or impossible to achieve a broad range of responses utilizing a single plant growth regulating agent. Consequently, the use of combinations of one or more selective agents sometimes is required in order to achieve a desired plant response.

The selectivity and limitations of growth regulator activity displayed by certain agents which affect the growth of various turfgrass species has severely limited the widespread commercial use of such

agents. For example, mefluidide, a compound disclosed in U.S. Patent No. 3,894,078, is a plant growth regulator which is effective in suppressing the seedhead formation in various turfgrass species. Mefluidide also causes a ceasation of vegetative growth for a relatively short period of time when applied at adequate rates. In contrast, α-(1-methylethyl)-α-[4-trifluoromethoxyphenyl]-5-pyrimidinemethanol, a compound described in U.S. Patent No. 4,002,628, is very effective in regulating the growth of various turfgrass species, but limited retardation of seedhead formation is manifested. As a result, the use of such growth regulator is restricted since turf having an abundance of seedheads is unsightly, even though the overall turf remains at a desirably short height.

This invention relates to a novel turfgrass regulator composition which comprises about 0.05 to about 1.0 parts by weight of mefluidide and about 0.05 to about 5.0 parts by weight of α-(1-methylethyl)-α-[4-trifluoromethoxyphenyl]-5-pyrimidinemethanol, or suitable salts thereof. This combination overcomes the many disadvantages associated with the use alone of the respective compounds. The compositions of this invention provide a more immediate effect and a more prolonged growth retardation than is encountered with the use of either active ingredient alone.

The invention is more particularly directed to compositions comprised of, as a first component, mefluidide, a compound having the chemical name N-[2,4-dimethyl-5-(trifluoromethylsulfonylamino)phenyl]acetamide and defined by the formula

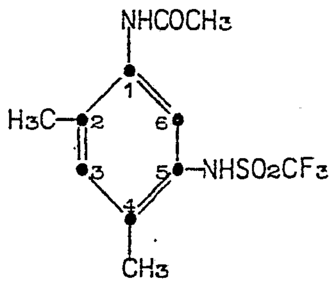

and as a second component the compound α-(1-methylethyl)-α-[4-(trifluoromethoxy)phenyl]-5-pyrimidinemethanol, a compound defined by the formula

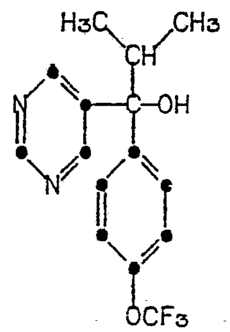

The compositions of this invention are comprised of the above active ingredients, or suitable salts or derivatives thereof, in a ratio of about 0.05 to about ].0 part of mefluidide to about 0.05 to about 5.0 parts of the pyrimidinemethanol derivative.

Preferred compositions comprise about 0.1 to about 0.4 parts of mefluidide to about 1 to about 2 parts of the pyrimidinemethanol growth regulator.

Also provided by this invention is a method for regulating the growth of plants which comprises applying to locus where vegetative regulation is desired mefluidide and α-(1-methylethyl)-α-[4-(trifluoromethoxy)-phenyl]-5-pyrimidinemethanol, or suitable salts thereof, of rates which in combination are effective in causing the desired growth regulation.

To prepare the compositions of this invention, the active ingredients are normally blended together with a carrier in a suitable apparatus according to procedures well known to those skilled in the art of herbicidal and formulation chemistry. The active ingredients can be of a technical grade, for instance from about 85 to about 100 percent pure. If desired, salts or other suitable derivatives of the active ingredients can be employed. Commonly used salts of mefluidide include the diethanolamine salt. Horticulturally acceptable salts of the pyrimidinemethanol derivative include the acid addition salts made with acids such as hydrochloric or acetic acid.

The carrier utilized in preparing compositions of the invention may be any inert dry or liquid carrier. In the case of dry carriers, various types may be employed. Typical solid carriers and diluents include clay, diatomaceous earth, sand, talc, synthetic carriers and the like. Dry compositions may be blended and

formulated as wettable powders and applied as sprays using water as a vehicle. Alternatively, the dry compositions may be formulated without a wetting agent and applied as a dust or in the form of granules or pellets.

The active ingredients of the composition can also be formulated as ready to use aqueous suspensions or oils or emulsifiable concentrates. They can additionally take the form of non-aqueous solutions or suspensions utilizing adjuvants and diluents such as xylene, toluene, acetone and the like.

As already pointed out, the active ingredients of this invention are known in the art and are readily synthesized by art-known methods. The mixture of active ingredients will be present, when formulated with the known carriers and excipients, in concentrations of about five percent by weight to about eighty percent by weight. If desired, suitable derivatives of the active ingredients can be employed to enhance formulation characteristics. A preferred form of mefluidide, for example, is as the diethanolamine salt. Such derivative is readily soluble in a vehicle such as water and lends itself to convenient application as an aqueous spray.

A preferred method for formulating and utilizing the compositions of this invention comprises tank-mixing individual formulations of mefluidide and α-(1-methylethyl)-α-[4-(trifluoromethoxy)phenyl]-5-pyrimidinemethanol. For example, the mefluidide can be formulated in water as the diethanolamine salt so that

the solution is equivalent to about 908 g. of mefluidide per 3.78 l. of solution. The α-(1-methylethyl)-α-[4-(trifluoromethoxy)phenyl]-5-pyrimidinemethanol can be formulated as a fifty percent wettable powder. The respective formulations can then be mixed and blended to uniformity at or near the site of application. The composition can be further diluted, for example by the addition of water or other suitable vehicle, so that the desired concentration of active ingredient is achieved, and the composition can be applied to plants which are to be growth regulated at a rate sufficient to effect the desired regulation.

The method for regulating the growth of vegetation according to this invention comprises applying post-emergence to the plants to be growth regulated the composition provided herein in an amount sufficient to effect growth regulation. In carrying out the method, the composition preferably will be applied post-emergence to the foliage of plants at a rate so that the mefluidide concentration is about 0.056 to about 1.12 kg/ha and the pyrimidinemethanol derivative is present at a rate of about 0.056 to about 5.6 kg/ha. An especially preferred method comprises applying a growth regulating amount of a composition wherein mefluidide contacts the plants to be growth regulated at a rate of about 0.11 to about 0.45 kg/ha and the pyrimidinemethanol derivative contacts the plants at a rate of about 1.12 to about 2.24 kg/ha.

The method of the invention is ideally suited to the growth regulation of various turfgrass species, including fine and course fescues, perennial bluegrasses such as Baron, Pennstar, Fylking; and ryegrasses, including Manhatten ryegrass. The compositions are surprisingly phytotoxic to undesired grasses such as large carbgrass, buckhorn plantain and related weedy species. The method also is well suited to the growth regulation of blends and mixtures of blends of various grass species, for instance any of the blends commonly employed in turf. The regulation of growth of turfgrasses is thus a preferred embodiment of the invention.

The regulation of growth of plants which can be achieved by employing the compositions and method of this invention offers many advantages over currently used growth regulation techniques. For example, the most common method of maintenance of highway right-of-ways which are seeded to turf requires the use of mechanical mowers. Such methods are undesirable due to the increasing expense of machinery and manpower, as well as the fact that such method requires the use of oil based energy sources, which not only increases cost of right-of-way maintenance, but also adds to unfavorable environmental pollution. Moreover, mechanical mowing procedures near high-speed highways or other heavy traffic areas poses a particularly unsafe environment for both mower operators and motorists. Also, society is constantly looking toward ways of securing more time available for recreation and pleasure. Homeowners having

a large turf area are required to spend a great deal of money and time in the maintenance of such areas. The present invention provides an economical alternative to these standard methods of maintenance.

The widespread use of either of the herbicidal agents employed in the present combinations has been prohibited due to their respective phytotoxic properties. As previously noted, the pyrimidinemethanol derivative fails to adequately and uniformly regulate seedhead formation in turfgrass species, and the presence of numerous seedheads in a turf greatly diminishes the aesthetic value of such turf area. Similarly, mefluidide, while effective in reducing seedhead formation, fails to retard growth of grasses beyond a period of about five to about seven weeks.

The compositions of the present invention provide a degree of growth regulation of vegetation at rates and control levels which would not be expected or predicted from the teaching of the art. By virtue of the use of the compositions of the present invention, lower amounts of the active ingredients which have heretofore been required for adequate growth regulation are utilized. This advantage has resulted in an improved overall regulation of the growth of turfgrass species, and additionally has resulted in a lowering of the levels of soil residue of the respective growth regulators. Moreover, the compositions of this invention effect excellent retardation of growth in height and seedhead formation of turfgrass species, while at the same time imparting no injury to such plant species

so that an aesthetically pleasing turf appearance can be maintained.

The following exemplification of preferred embodiments are now given. The examples should not be construed as limiting the invention in any respect.

Example 1

Tank-Mix Combination

908 g. of a wettable powder formulation containing 50 percent by weight of α-(1-methylethyl)-α-[4-(trifluoromethoxy)phenyl]-5-pyrimidinemethanol were blended with 0.121 l. of an aqueous suspension containing 908 g. of mefluidide per 3.78 l. The mixture was diluted with 189 l. of water, and the solution was agitated to uniformity. The solution was sprayed uniformly over 0.4 ha of turfgrass, so that the pyrimidinemethanol concentration was 1.12 kg/ha and the mefluidide concentration was 0.07 kg/ha.

Example 2

Wettable Powder Formulation

| Ingredient | Amount (kg) |
|---|---|
| α-(1-methylethyl)-α-[4-trifluoromethoxy)phenyl]-5-pyrimidinemethanol technical grade, about 90 to about 98 percent pure | 4.54 |
| mefluidide, technical, about 95 percent pure | 1.14 |
| silicon dioxide, fumed silica | 4.54 |
| octylphenol-ethylene oxide blend wetting agent | 0.68 |
| | 10.90 |

The above ingredients are blended to uniformity in the dry state. The mixture can be air milled and passed through a screen to provide a free flowing powder of uniform particle size. The powder is diluted with water at the site of application and sprayed on turf foliage so that the concentration of the pyrimidinemethanol is about 1.12 kg/ha and that of the mefluidide is about 0.28 kg/ha.

Example 3

The compositions of this invention have been evaluated in greenhouse and open field tests designed to show growth regulator activity and crop injury. In a typical test, an established turf of a bluegrass blend comprised of 50% Baron, 25% Pennstar and 25% Fylking was grown in an open field on a level clay loam soil. The turf was mowed to a height of 6.35 cm. and fertilized at 454 g/92.9 $m.^2$ (18-5-9) prior to application of herbicide. The field was sectioned into plots measuring 0.915 m. by 3.05 m. The composition of this invention was formulated by tank-mixing the individual ingredients, and application at various rates was accomplished by aqueous spray to foliage. Each concentration of the combination of this invention and the individual growth regulators was replicated three times. Analysis of growth regulation was made by visual inspection and comparison to an untreated control area. The degree of growth retardation was analyzed for the three replicates, and the values were averaged as a percent of plant growth inhibition relative to untreated control plots. Observations were made at various intervals post application. The results of one such test are presented below in Table I.

Table I

| Time of Observation (Days Post-Application) | Concentration of α-(1-methylethyl)-α-[4-(trifluoromethoxy)phenyl]-5-pyrimidinemethanol (kg/ha) | Mefluidide Concentration (kg/ha) | | | |
|---|---|---|---|---|---|
| | | 0 | 0.07 | 0.14 | 0.28 |
| 14 | 0 | 0 | 43 | 65 | 76 |
| 14 | 0.84 | 0 | 72 | 75 | 90 |
| 14 | 1.12 | 7 | 88 | 88 | 95 |
| 14 | 1.68 | 30 | 89 | 90 | 96 |
| 14 | 2.24 | 30 | 90 | 91 | 97 |
| 24 | 0 | 0 | 53 | 72 | 80 |
| 24 | 0.84 | 27 | 82 | 77 | 87 |
| 24 | 1.12 | 33 | 88 | 85 | 92 |
| 24 | 1.68 | 35 | 90 | 89 | 92 |
| 24 | 2.24 | 40 | 91 | 91 | 94 |
| 38 | 0 | 0 | 35 | 45 | 37 |
| 38 | 0.84 | 37 | 60 | 53 | 72 |
| 38 | 1.12 | 60 | 73 | 72 | 78 |
| 38 | 1.68 | 67 | 86 | 83 | 87 |
| 38 | 2.24 | 72 | 93 | 90 | 92 |
| 52 | 0 | 0 | 7 | 7 | 10 |
| 52 | 0.84 | 13 | 33 | 30 | 35 |
| 52 | 1.12 | 27 | 55 | 42 | 60 |
| 52 | 1.68 | 23 | 68 | 67 | 65 |
| 52 | 2.24 | 53 | 75 | 73 | 78 |

Example 4

A study similar to that described in Example 3 was carried out to determine the efficacy and turfgrass tolerance of the tank-mixed combination of this invention when applied to the foliage of a bluegrass turf comprised of 50 percent Baron, 25 percent Fylking and 25 percent Pennstar. The results of the study are presented in Table II.

Table II

| Time of Observation (Days Post-Application) | Concentration of α-(1-methylethyl)-α-[4-tri-fluoromethoxy)phenyl]-5-pyrimidinemethanol (kg/ha) | Mefluidide Concentration (kg/ha) 0 | 0.28 |
|---|---|---|---|
| 17 | 0 | 0 | 98 |
| 17 | 0.56 | 58 | |
| 17 | 1.12 | 76 | |
| 17 | 2.24 | 93 | 100 |
| 35 | 0 | 0 | 81 |
| 35 | 0.56 | 66 | |
| 35 | 1.12 | 83 | |
| 35 | 2.24 | 94 | 98 |
| 41 | 0 | 0 | 69 |
| 41 | 0.56 | 55 | |
| 41 | 1.12 | 73 | |
| 41 | 2.24 | 93 | 98 |
| 51 | 0 | 0 | 55 |
| 51 | 0.56 | 48 | |
| 51 | 1.12 | 66 | |
| 51 | 2.24 | 91 | 90 |

## Example 5

By following the procedure of Example 3, the combination of this invention was evaluated on a turf of bluegrass and fine textured ryegrass comprised of a blend of Manhatten and Pelo Ryegrass, and a blend of Pennstar and Fylking bluegrass. As the data in Table III demonstrate, the composition of this invention provides excellent growth inhibition over a prolonged period when applied to plant foliage.

Table III

| Time of Observation (Days Post-Application) | Concentration of α-(1-methylethyl)-α-[4-trifluoromethoxy)phenyl]-5-pyrimidinemethanol (kg/ha) | Mefluidide Concentration (kg/ha) 0 | 0.28 |
|---|---|---|---|
| 17 | 0 | 0 | 90 |
| 17 | 0.56 | 62 | |
| 17 | 1.12 | 77 | |
| 17 | 2.24 | 92 | 100 |
| 35 | 0 | 0 | 63 |
| 35 | 0.56 | 52 | |
| 35 | 1.12 | 69 | |
| 35 | 2.24 | 85 | 98 |
| 41 | 0 | 0 | 50 |
| 41 | 0.56 | 45 | |
| 41 | 1.12 | 62 | |
| 41 | 2.24 | 82 | 97 |
| 51 | 0 | 0 | 50 |
| 51 | 0.56 | 43 | |
| 51 | 1.12 | 62 | |
| 51 | 2.24 | 78 | 90 |

## Example 6

The growth inhibitory efficacy of combinations of the invention against several bioassay species was determined by greenhouse experiments carried out as follows: Flats were filled with steamed Brookston silt loam soil. The soil was top watered and allowed to drain to field capacity. The individual flats were seeded in strips with Captan-treated large crabgrass, buckhorn plantain and Manhatten perennial ryegrass. After seeding, the flats were top dressed with soil, watered at three-day intervals, and maintained in a greenhouse. After the three strips of bioassay species has emerged, strips of large crabgrass and buckhorn plantain were seeded in the same flats and top dressed with soil. The flats were treated with varying rates of mefluidide and α-(1-methylethyl)-α-[4-(trifluoromethoxy)phenyl]-5-pyrimidinemethanol, and the combinations thereof. After the growth regulators had been applied, the flats were held in a greenhouse for four weeks to allow plants to establish and develop and to allow toxicity symptoms to develop. The pre- and post-emergent growth regulator activity of the compounds was evaluated against the large crabgrass and buckhorn plantain species, while only the post-emergent activity against Manhatten ryegrass was evaluated.

In all cases, growth inhibition efficacy was determined by visual examination using a rating scale of 0 to 10, with 0 being no inhibition or normal growth, and 10 being 100% inhibition or no new growth. The code letters B, R and S were used to indicate burning, reduced germination and stunting respectively. The results of the assay are presented in Table IV.

## Table IV

| Concentration of α-(1-methylethyl)-α-[4-trifluoromethoxy)phenyl]-5-pyrimidinemethanol (kg/ha) | Mefluidide Concentration (kg/ha) Post-Emergence | | | | Pre-Emergence | | | |
|---|---|---|---|---|---|---|---|---|
| **Large Crabgrass** | 0 | 0.07 | 0.14 | 0.28 | 0 | 0.07 | 0.14 | 0.28 |
| 0 | 0 | 0 | 2S | 2S | 0 | 0 | 0 | 2S |
| 0.07 | 3S | 2S | 2S | 3S | 3S | 7RS | 4S | 6S |
| 0.14 | 3S | 3S | 3S | 3S | 4S | 5S | 5S | 7S |
| 0.28 | 4S | 3.5S | 3.5S | 3S | 5S | 6S | 5S | 6S |

| (kg/ha) | Post-Emergence | | | | Pre-Emergence | | | |
|---|---|---|---|---|---|---|---|---|
| **Buckhorn Plantain** | 0 | 0.07 | 0.14 | 0.28 | 0 | 0.07 | 0.14 | 0.28 |
| 0 | 0 | 0 | 0 | 0 | 0 | 0 | 0 | 0 |
| 0.07 | 2S | 2S | 3S | 3S | 4S | 7RS | 7RS | 8RS |
| 0.14 | 3S | 3S | 4S | 4S | 8RS | 8RS | 7RS | 10 |
| 0.28 | 3S | 5S | 4S | 4S | 8RS | 9RS | 7RS | 9RS |

Table IV

| Concentration of α-(1-methylethyl)-α-[4-trifluoromethoxy)phenyl]-5-pyrimidinemethanol (kg/ha) | Mefluidide Concentration (kg/ha) Post-Emergence Manhatten Ryegrass | | | |
|---|---|---|---|---|
| | 0 | 0.07 | 0.14 | 0.28 |
| 0 | 0 | 0 | 0 | 2BS |
| 0.07 | 0 | 0 | 2S | 3BS |
| 0.14 | 0 | 0 | 2S | 3BS |
| 0.28 | 0 | 2BS | 2SB | 3BS |

The results demonstrate that the combinations of the invention are selectively more efficacious than the components against undesired weeds such as crabgrass and buckhorn plantain. The combinations accordingly are useful when applied pre-emergence in retarding the germination and growth of undesirable grass species such as crabgrass, while still providing growth inhibition to the desirable species.

Example 7

Growth regulator efficacy also was determined in open field plots. Plots having an established turf comprised of 50% Baron, 25% Pennstar and 25% Fylking were treated with various concentrations of the respective components of the combination of the invention, and with the combination. Efficacy ratings were made thirty-eight days later by visual inspection, using a scale of zero to 100 percent, with zero percent being no turf inhibition and 100 percent being no new growth or 100% inhibition. The results of the field study are presented in Table V.

Table V

| Concentration of α-(1-methylethyl)-α-[4-trifluoromethoxy)phenyl]-5-pyrimidinemethanol (kg/ha) | Mefluidide Concentration (kg/ha) | | | |
|---|---|---|---|---|
| | 0 | 0.07 | 0.14 | 0.28 |
| 0 | 0 | 0 | 0 | 0 |
| 0.84 | 0 | 0 | 0 | 13 |
| 1.12 | 0 | 20 | 23 | 23 |
| 1.68 | 0 | 27 | 23 | 33 |
| 2.24 | 0 | 40 | 37 | 43 |

Example 8

An open field study was conducted to determine the plant growth regulator effects on turfgrass of various combinations of α-(1-methylethyl)-α-[4-(trifluoromethoxy)phenyl]-5-pyrimidinemethanol and mefluidine, as well as the effects of these components when employed alone.

The evaluations were carried out as follows: Established turf comprised of a blend of deluxe bluegrasses, baron, flyking and pennstar was employed for the test. Plots measuring 0.92 m. by 3.05 m. were employed, and three replicates were used for each evaluation. The open fields were comprised of soil which is a clayish loam with intermediate moisture content. The fields had a level topography, and were irrigated as needed by a total sprinkler system.

Mefluidide was employed in the form of commercial Embark 2S, and the pyrimidinemethanol component was employed as a 50 percent wettable powder formulation. The individual components were mixed with water and sprayed onto the turf at varying rates of active ingredient employing a backpak spray apparatus having a 0.92 m. spray width at 2.8 kg/cm.$^2$ operating pressure. The combinations of the respective components were prepared by tank mixing the individual components.

All applications were made by surface spraying the turf. The turf was undergoing spring greenup at this time. The degree of plant growth regulation for each application rate of test substance was made by visual comparison to non-treated control plots. All observations were made 33 days after application.

Evaluation of two plant growth regulator responses, by the individual components and the combination, were done. Specifically, the turfgrass seedhead inhibition by visually rating treated plots to non-treated plots on a scale of 0 to 10, with 0 being assigned to control plots and representing no inhibition of seedhead formation, and 10 representing a 100 percent inhibition of seedhead formation. Observations were made on three replicated plots at each indicated application rate, and the individual observations were pooled to arrive at a mean percentage of seedhead inhibition.

Table VI below presents the results of turfgrass seedhead inhibition following application of the combination described in the captioned application at various rates, as well as seedhead inhibition caused by the individual components when applied at various rates. As the results demonstrate, the pyrimidinemethanol component is essentially ineffective in diminishing the formation of seedheads. Mefluidide is somewhat effective, but only at the higher application rates used, i.e., 0.14 and 0.28 kg/ha. The combination of the respective components was very effective in inhibiting seedhead formation, even at low application rates at which the individual components caused no response.

Table VI

Turfgrass Seedhead Inhibition

| α-(1-methylethyl)-α-[4-(trifluoromethoxy)phenyl]-5-pyrimidinemethanol (kg/ha) | Mefluidide (kg/ha) | | | | |
|---|---|---|---|---|---|
| | 0 | 0.035 | 0.07 | 0.14 | 0.28 |
| 0 | 0 | 0 | 17 | 53 | 57 |
| 0.56 | 0 | 43 | 43 | 87 | 98 |
| 0.84 | 0 | 40 | 63 | 97 | 100 |
| 1.12 | 0 | 53 | 50 | 88 | 100 |
| 1.68 | 0 | 82 | 80 | 95 | 100 |
| 2.24 | 17 | 73 | 87 | 98 | 100 |

Example 9

Table VII below presents the observations on the ability of the subject combination of Example 8 and the individual components to retard the normal growth of turfgrass. All applications of test materials were made at a time when the turf was actively growing. The percentage values of plant growth inhibition presented in Table VII were arrived at by visual observation of three replicated treated plots for each application rate compared to untreated control plots. The inhibition ratings were made on a scale of 0 to 10, with the non-treated control turf being assigned the number 0, which represents no growth inhibition, and the rating of 10 was used to denote 100 percent plant growth inhibition. Results of three replicated plots for each application rate were pooled to arrive at a mean value of inhibition, which then was multiplied by ten to obtain the percentage values presented in Table VII.

## Table VII

### Turfgrass Growth Inhibition

| α-(1-methylethyl)-α-[4-(tri-fluoromethoxy)phenyl]-5-pyrimidinemethanol (kg/ha) | Mefluidide (kg/ha) 0 | 0.035 | 0.07 | 0.14 | 0.28 |
|---|---|---|---|---|---|
| 0 | 0 | 13 | 47 | 65 | 63 |
| 0.56 | 23 | 61 | 70 | 83 | 83 |
| 0.84 | 32 | 72 | 80 | 88 | 96 |
| 1.12 | 42 | 75 | 78 | 88 | 98 |
| 1.68 | 58 | 88 | 90 | 94 | 99 |
| 2.24 | 63 | 91 | 93 | 97 | 100 |

The results of the various tests carried out utilizing the compositions provided by this invention demonstrate that the compositions are surprisingly effective in maintaining turfgrasses at desirable levels of growth for a prolonged period of time. In particular, when applied to the foliage of turf which has been manicured to an aesthetically pleasing growth pattern, the compositions of the invention are effective in maintaining the aesthetic nature of the turf by retarding the linear growth of the plants, while at the same time eliminating the excessive and unsightly accumulation of seedheads. Moreover, the desired growth regulation is achieved with concentrations of the composition which do not adversely affect aesthetic values associated with a turf. Use of the compositions according to this invention accordingly provides an economical means for maintaining a desired turf appearance throughout an entire growing season by repeated applications from 1 to about 4 times per growing period, or as needed by the particular species of turf being regulated, as well as the climatic condition of sun and water which affect the growth of vegetation. The combinations according to this invention permit the use of the components at concentrations lower than would be expected for the degree of growth regulation encountered. Additionally, use of the compositions according to this invention permits the continued regulation of growth of desirable turfgrass species such as bluegrasses and the like while at the same time inhibiting the emergence and development of undesired turf weed species such as crabgrass, buckhorn plantain, dandelion, white clover and the like.

CLAIMS

1. A turfgrass growth regulator composition which comprises about 0.05 to about 1.0 part by weight of mefluidide and about 0.05 to about 5.0 parts by weight of α-(1-methylethyl)-α-[4-(trifluoromethoxy)-phenyl]-5-pyrimidinemethanol, or suitable salts thereof.

2. The composition of Claim 1 comprising about 0.1 to about 0.4 parts of mefluidide and about 1 to about 2 parts of α-(1-methylethyl)-α-[4-(trifluoro-methoxy)phenyl]-5-pyrimidinemethanol.

3. The composition of Claim 1 wherein said composition contains an inert carrier.

4. The composition of Claim 2 wherein said composition contains an inert carrier.

5. The composition of claim 1 wherein the concentration of active ingredients is about 5 to about 80 percent by weight and inert carriers are present at about 5 to about 20 percent by weight.

6. A method for regulating the growth of vegetation which comprises applying to the locus where vegetative regulation is desired an effective amount of a composition of Claim 1.

7. The method of Claim 6 wherein the rates used are that the mefluidide is about 0.056 to about 1.12 kg/ha and the pyrimidinemethanol compound is about 0.056 to about 5.6 kg/ha.